# EUROPEAN PATENT APPLICATION

(11) **EP 1 566 365 A1**
(43) Date of publication of application: **24.08.2005**
(21) Application number: 05002580.8
(22) Date of filing: 08.02.2005
(51) Int. Cl.: C03B 33/07, C03B 33/03, B65G 49/06, C03B 33/10

(54) **Cutting table with glass sheets positioning means**

(30) Priority: 18.02.2004 IT mi20040275
(71) Applicant: Z. BAVELLONI S.p.A., I-22070 Bregnano (Como) (IT)
(72) Inventor: Bavelloni, Franco, 22020 San Fermo Della Battaglia (IT)
(74) Representative: Modiano, Guido

(57) **Abstract**

A cutting table particularly for laminated glass panes, comprising a surface (3) for supporting the pane (L) being worked and pushers (11) for positioning the pane (L) being worked at the cutting heads (6,7), at least one of the pushers (11) being provided with angular positioning elements (16) and determining at least two separate points for engagement with the pane (L) being worked, an abutment element (30) being further provided which can be positioned so as to define a third point for engagement with the pane (L) being worked.

## Description

The present invention relates to a cutting table particularly for laminated glass panes.

As is known, cutting tables used for laminated glass panes are generally constituted by a working surface on which the pane that is to be moved for working below the cutting heads is rested, the cutting heads being arranged so as to simultaneously score the lower layer and the upper layer.

The pane is positioned by means of pushers, generally fitted on a movable beam, which lies substantially parallel to the working direction of the cutting or scoring heads and can perform a translational motion under the control of a program along a direction that is substantially perpendicular to the cutting line, in order to correctly position the pane to be cut.

The pushers rise above the supporting surface by means of pistons or other solutions and push the pane into the cutting position; it clearly appears that this type of machine allows to perform automatically only 90° cuts on the glass panes.

When it is necessary to perform inclined cuts, for example to obtain a trapezoid-, a diamond-shape or a figure in which the sides are not perpendicular, the operator has to trace manually the starting point and the endpoint of the side to be cut and must then manually position the pane below the beam that supports the cutting heads, positioning such pane by sighting a mechanical reference generally provided by a rod that is positioned on the cutting line and is removed after the pane has been positioned in order to be able to perform the cut.

Obviously, this method, besides being scarcely practical, is inaccurate and its successful outcome is considerably entrusted to the skill and attention of the operator.

The aim of the invention is to solve the problem described above, by providing a cutting table particularly for laminated glass panes, that allows to perform inclined cuts and in any case cuts with an angle other than 90° between two contiguous sides without thereby having to resort to substantial manual work.

Within this aim, an object of the invention is to provide a cutting table in which it is possible to automatically position the pane with the intended inclination, thus allowing to perform inclined cuts of any kind.

Another object of the present invention is to provide a cutting table, particularly for laminated glass panes, that thanks to its particular constructive characteristics is capable of giving the greatest assurances of reliability and safety in use.

Another object of the present invention is to provide a cutting table that can be easily obtained starting from commonly commercially available elements and materials and is also competitive from a merely economical standpoint.

This aim and these and other objects that will become better apparent hereinafter are achieved by a cutting table particularly for laminated glass panes, according to the invention, comprising a surface for supporting the pane being worked and pushers for positioning the pane being worked at the cutting heads, the table comprising three separate points for engagement with the pane being worked which are formed by said pushers and by at least one of said cutting heads.

Advantageously at least one of said pushers is provided with angular positioning means and determines at least two separate points for engagement with the pane being worked, an abutment element being further provided which can be positioned so as to define a third point for engagement with the pane being worked.

Further characteristics and advantages will become better apparent from the description of a preferred but not exclusive embodiment of a cutting table particularly for laminated glass panes, illustrated by way of non-limiting example in the accompanying drawings, wherein:

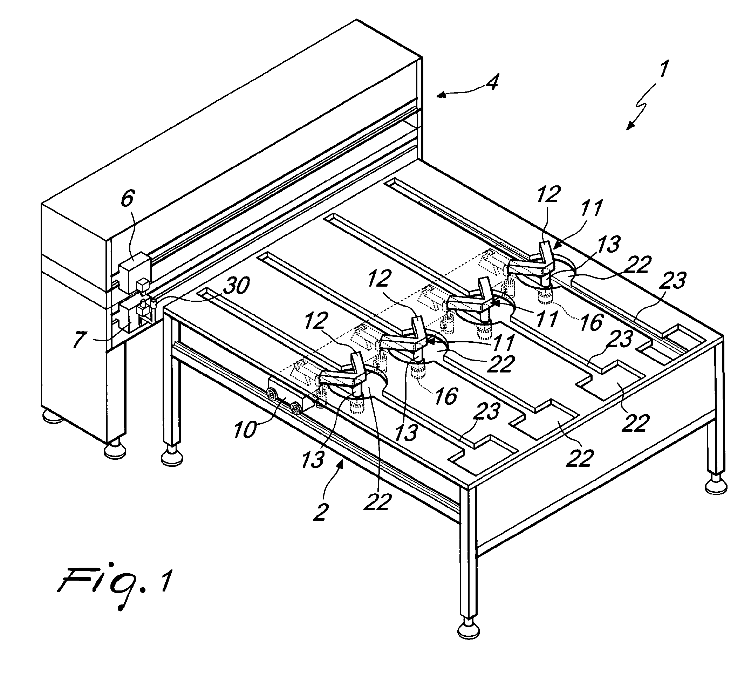

Figure 1 is a schematic perspective view of the cutting table according to the invention;
Figure 2 is a view of the cutting table during the execution of a 90° cut;
Figure 3 is a view of the cutting table during the execution of an inclined cut;

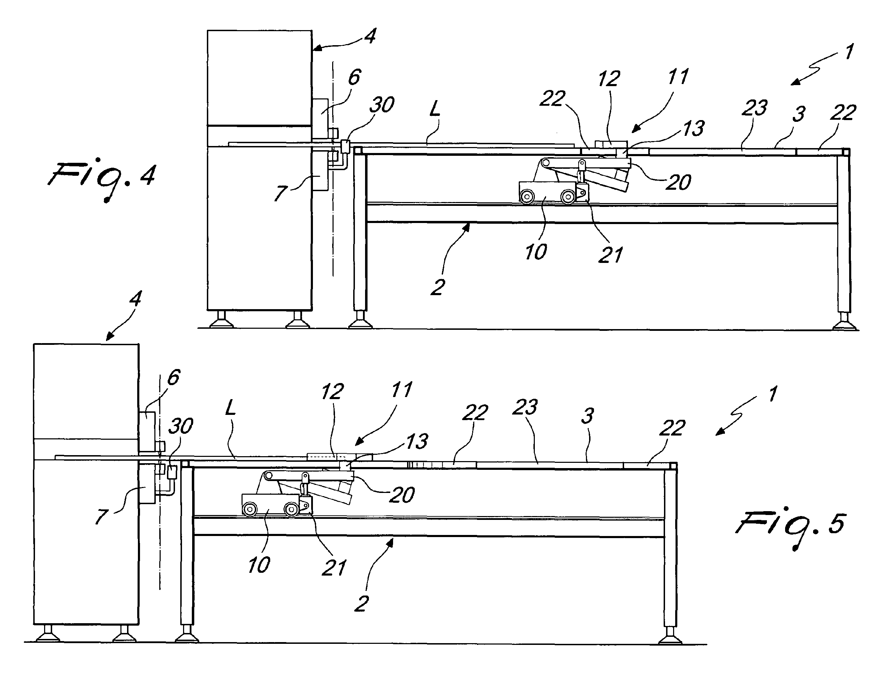

Figure 4 is an elevation view of the arrangement of the pusher during work to perform an inclined cut;
Figure 5 is a view of the inclined cutting step;
Figure 6 is a detail view of a constructive detail of a pusher;
Figure 7 is a view of an embodiment of the pusher, configured like an L-shaped element with sides that can mutually oscillate;
Figure 8 is a view of an embodiment with the L-shaped element on a cutting head;
Figure 9 is a view of an embodiment in which the L-shaped body can perform a transverse translational motion;
Figure 10 is a view of an embodiment with the engagement points on two cutting heads.

With reference to the figures, the cutting table particularly for laminated glass panes, according to the invention, generally designated by the reference numeral 1, comprises a supporting framework 2, which forms a supporting surface 3 for positioning a laminated glass pane to be cut.

At one end of the cutting table there is a conventional cutting beam, generally designated by the reference numeral 4, on which the cutting heads are positioned; said cutting heads have an upper cutting head 6 and a lower cutting head 7, which are moved synchronously along the cutting line in order to perform the scoring for cutting or cut-running the laminated pane.

Below the supporting surface 3 there is a pusher bar 10 provided with the pushers 11, which position the pane being worked at the cutting heads.

The beam or bar 10 lies substantially parallel to the direction of motion of the heads 6 and 7 and can perform a translational motion along a direction that is perpendicular to its extension.

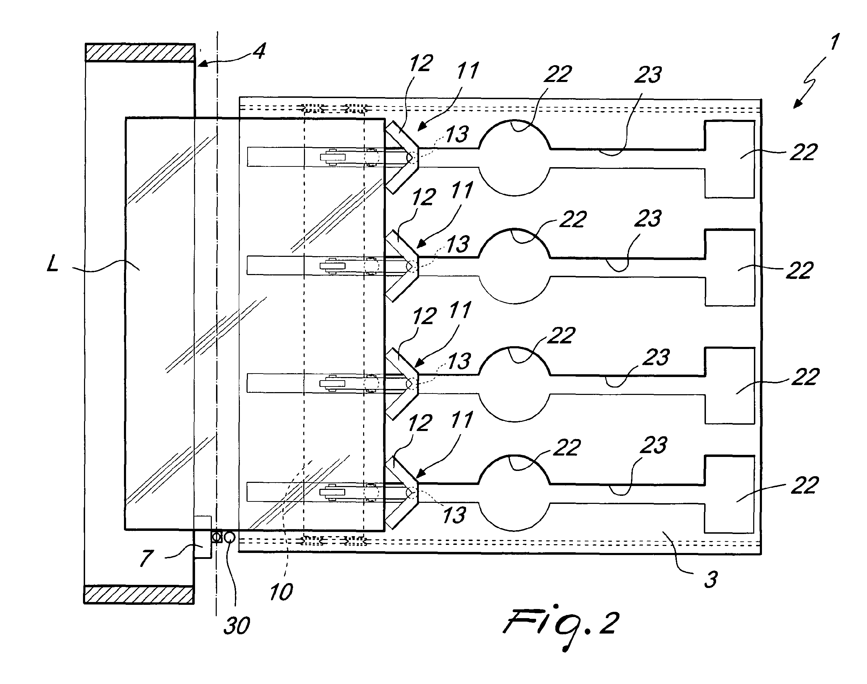

In this manner, as shown in Figure 2, the pushers 11 position the pane L below the cutting line so as to perform, in a per se known manner, the various cuts along directions that are mutually substantially perpendicular.

The particularity of the invention is constituted by the fact that it is possible to use at least one of the pushers to position the pane being worked so as to perform so-called inclined cuts; in practice, it is possible to define three points of engagement with the pane to be cut, which can be provided by means of the pushers and the cutting heads.

For this purpose, the pushers 11 have elements shaped as an L-shaped body 12, which forms two mutually substantially perpendicular arms that are supported by a pivot 13, which can rotate about a substantially vertical axis in order to be able to perform a preset angular positioning.

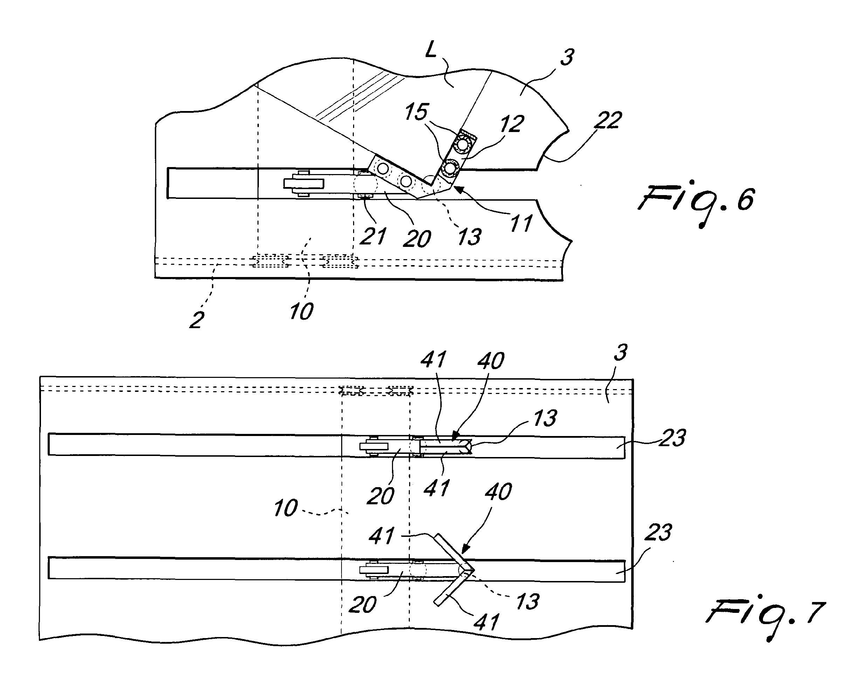

The L-shaped elements 12 engage in two separate points the edge of a pane that is already cut at 90° and preferably, as shown in Figure 6, on the arms of the L-shaped elements 12 there are protruding rollers 15, which provide contact with the edge of the pane so as to avoid impacts or damage.

The rotation and positioning of the abutment elements 12 in order to obtain the intended angular positioning can be achieved by means of an encoder or other element, which is generally designated by the reference number 16 and is arranged below the pushers constituting thus angular positioning means.

The pushers 11 can be positioned in the working position above the working table or surface 3 or optionally, if they do not need to be used, the pushers can be positioned below the working surface, and for this purpose they are supported by positioning means, constituted, for example by an oscillating arm 20, which is actuated by a piston 21 that lifts and lowers the corresponding pusher.

Advantageously, on the working surface there are openings 22, which can be positioned at the end of the slots 23 for the passage of the pivots 13 or in a central position, if the pushers are to be moved from the working position to the inactive position without having to return the bar 10 to the initial position.

To perform an inclined cut, an abutment element 30 is also provided, which is supported by one of the cutting heads, preferably by the lower head 7, so that such element 30 can be arranged in an upper position, in which it protrudes with respect to the working surface 3, and in a lower position, in which it does not interfere with the pane being worked.

The abutment accordingly forms a third point for engagement with the pane being worked, which is located substantially proximate to the cutting line.

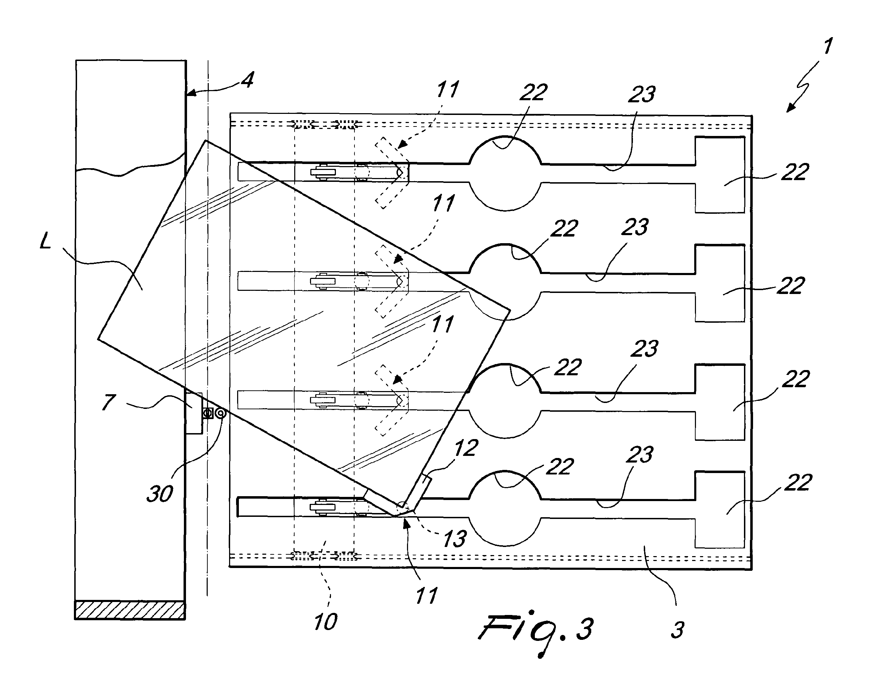

As shown in Figure 3, when it is necessary to perform an inclined cut, the selected abutment element is positioned, with the L-shaped element 12, in the selected angular position and the pane L being worked is positioned so that it engages the at least two points of contact formed by the L-shaped element 12 and the third point formed by the abutment element 30.

In this manner it is therefore possible to perform inclined cuts in a fully automatic manner; naturally, the pusher to be used is selected according to the correct placement of the pane to be cut on the working surface.

If it is necessary to perform inclined cuts on panes that have corners formed by sides that are not mutually perpendicular, it is possible to provide L-shaped elements, designated by the reference numeral 40 in Figure 7, in which the corresponding positioning arms 41 can oscillate with respect to each other about the axis that passes through the corner of the pane; the L-shaped elements 40 may further rotate about the pivot 13 in order to assume the intended angular position.

In this manner, it is possible to set between the arms 41 the selected mutual angle to perform inclined cuts on a plurality of sides.

Moreover, the mutually oscillating arms can also be moved mutually closer in order to achieve the passage of the abutment element through the slots for the sliding of said abutment elements.

From what has been described above, it is therefore evident that the invention achieves the intended aim and objects, and in particular the fact is stressed that providing a pusher that forms an L-shaped element in which the corner coincides with the rotation axis of the pusher allows to adjust the angular position so as to automatically obtain the positioning for obtaining inclined cuts.

From what has been described above it is therefore evident that the invention achieves the intended aim and objects, and in particular the fact is stressed that a cutting table is provided which is particularly functional and allows to automatically perform inclined cuts on laminated panes, which currently cannot be performed with the solutions of the background art.

The invention thus conceived is susceptible of numerous modifications and variations, all of which are within the scope of the appended claims.

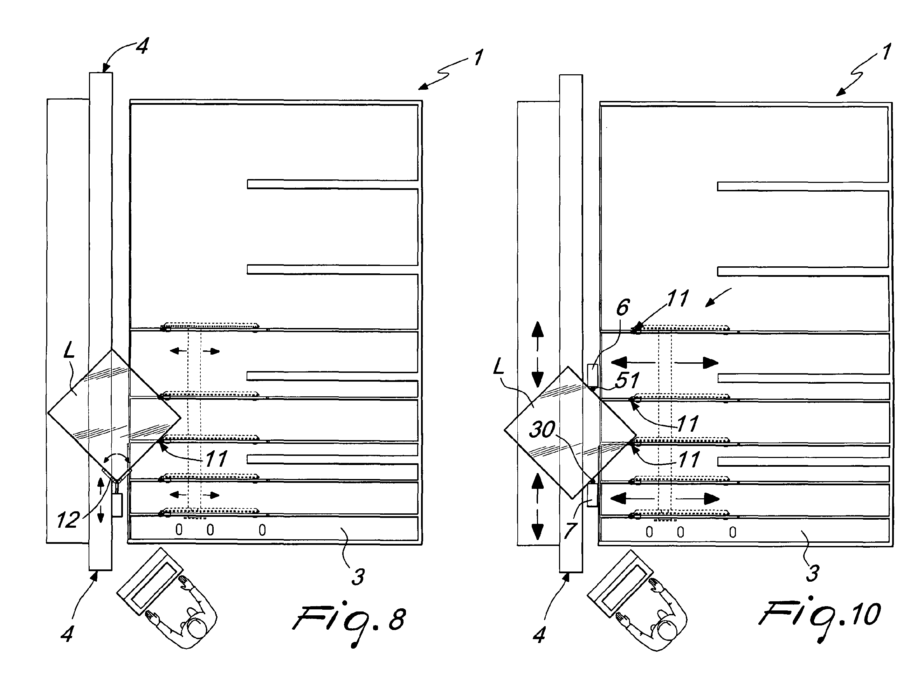

Thus, for example, as shown in Figure 8, the L-shaped body 12 is positioned on one of the cutting heads 6 or 7, while the third engagement point is constituted by one of the pushers 11.

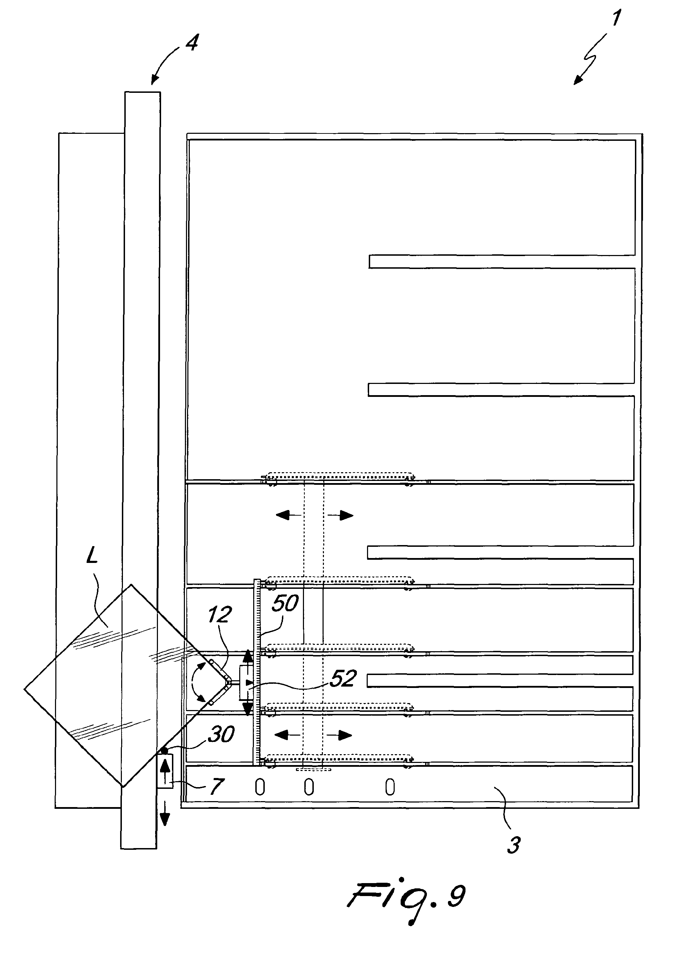

According to what is shown, in Figure 9 the L-shaped body 12 is positioned on a pusher cross-member 50 with the interposition of known motion supporting means 52 for translational motion along a direction that is substantially perpendicular to the advancement direction of the pushers. The pusher cross-member 50 can also be actuated to perform a translational motion in the direction of translational motion of the pushers by the motion means 52 and can itself act as a pusher by removing the assembly with the L-shaped body.

With reference to Figure 10, the three engagement points are constituted by one point, again designated by the reference numeral 30, which is arranged on the cutting head 7, by a second engagement point, designated by the reference numeral 51, which is arranged on the head 6, and a third point, which is constituted by a pusher 11.

All the details may further be replaced with other technically equivalent elements.

In practice, the materials used, as well as the contingent shapes and dimensions, may be any according to requirements.

The disclosures in Italian Patent Application No. MI2004A000275 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cutting table particularly for laminated glass panes, comprising a surface (3) for supporting the pane (L) being worked and pushers (11) for positioning the pane (L) being worked at the cutting heads (6,7), **characterized in that** it comprises three separate points for engagement with the pane being worked, which are formed by said pushers (11) and by at least one of said cutting heads (6,7).

2. A cutting table according to claim 1, **characterized in that** at least one of said pushers (11) is provided with angular positioning means (16) and forms at least two separate points for engagement with the pane (L) being worked, an abutment element (30) being further provided which can be positioned so as to define a third point for engagement with said pane (L) being worked.

3. The cutting table according to one or more of the preceding claims, **characterized in that** said angular positioning means (16) that define two separate points for engagement with the pane (L) being worked are associated with one of said cutting heads (6,7), the third engagement point being defined by one of said pushers (11).

4. The cutting table according to one or more of the preceding claims, **characterized in that** it comprises two of said engagement points, which are positioned on said cutting heads (6,7), and the third engagement point, which is formed by one of said pushers (11).

5. The cutting table according to one or more of the preceding claims, **characterized in that** said at least one of said pushers (11), provided with angular positioning means (16) and forming at least two engagement points, is supported, by way of means (52) for translational motion along a direction that is substantially perpendicular to the advancement direction of said pushers (11), by a pusher cross-member (50), which is provided with means for translational motion in the direction of advancement of said pushers (11).

6. The cutting table according to one or more of the preceding claims, **characterized in that** said pushers (11) have an L-shaped body (12) that forms two arms that are mutually substantially perpendicular.

7. The cutting table according to claim 6, **characterized in that** it comprises a pivot (13) that supports said L-shaped body (12) and can rotate about an axis that coincides with the vertex formed by the two arms of said L-shaped body (12).

8. The cutting table according to one or more of the preceding claims, **characterized in that** said L-shaped body (12) defines said two points on the two arms that constitute said L-shaped body.

9. The cutting table according to one or more of claims 6-8, **characterized in that** rollers (15) are provided on the arms of said L-shaped body (12) and protrude so as to form the points of contact with the edge of the pane (L) being worked.

10. The cutting table according to claims 7-9, **characterized in that** said angular positioning means (16) act on said pivot (13).

11. The cutting table according to one or more of claims 2-9, **characterized in that** said angular positioning means comprises an encoder (16) for turning said pivot (13).

12. The cutting table according to one or more of the preceding claims, **characterized in that** it comprises positioning means for positioning said pushers (11) below and above said supporting surface (3), said positioning means comprising an oscillating arm (20) that supports said pivot (13) and is actuated by a piston (21) for lifting and lowering the corresponding pusher (11).

13. The cutting table according to one or more of the preceding claims, **characterized in that** it comprises, on said supporting surface (3), openings (22) positioned at the end and at least at one central portion of the slots (23) for the sliding of said elements (13,20) for the movement of said pushers (11) from the active position to the inactive position and/or vice versa.

14. The cutting table according to one or more of the preceding claims, **characterized in that** said abutment element (30) is supported by one of said cutting heads (6,7).

15. The cutting table according to one or more of the preceding claims, **characterized in that** said abutment element (30) can perform a translational motion from an upward position, in which it protrudes with respect to said supporting surface (3), to a lower position, in which it does not interfere with the pane (L) being worked, and/or vice versa.

16. The cutting table according to one or more of the preceding claims, **characterized in that** said abutment elements comprise L-shaped elements (40) which have positioning arms (41) that can oscillate with respect to each other about the axis that passes through the vertex of the L-shaped elements, said positioning arms (41) being arrangeable with a mutual angle that can be preset.
